# FASCICULE DE BREVET EUROPEEN

(11) **EP 2 316 752 B1**
(45) Date de publication et mention de la délivrance du brevet: **13.02.2013**
(21) Numéro de dépôt: 10305964.8
(22) Date de dépôt: 08.09.2010
(51) Int. Cl.: B65D 90/32, B65D 90/36, B60K 15/03, B64D 37/32

(54) **Réservoir protégé contre la surpression**
Behälter mit überdruckschutz
Reservoir with overpressure protection

(30) Priorité: 27.10.2009 FR 0957542
(43) Date de publication de la demande: 04.05.2011
(73) Titulaire: AERAZUR, 78370 Plaisir (FR)
(72) Inventeur: Bac, Jean Claude, 76650, PETIT COURONNE (FR); Jeanne, François, 76000, ROUEN (FR)
(74) Mandataire: Zimmermann, Alain

(56) Documents cités:
- EP-A1- 0 674 130
- WO-A1-2004/106155
- DE-A1- 3 040 278
- DE-A1- 4 018 648
- US-A- 3 559 708
- US-A- 4 172 573

## Description

La présente invention concerne les réservoirs et particulièrement les réservoirs de carburant sécurisés contre une surpression.

Un réservoir accueille en conditions normales un liquide, tel un carburant. Le problème que l'on se propose de résoudre ici est de ne pas répandre le liquide hors du réservoir en cas de forte surpression. Ceci correspond par exemple, le réservoir étant employé sur un véhicule terrestre ou un aéronef, à un fort choc appliqué au réservoir lors d'une collision ou d'une chute subie par le véhicule ou l'aéronef.

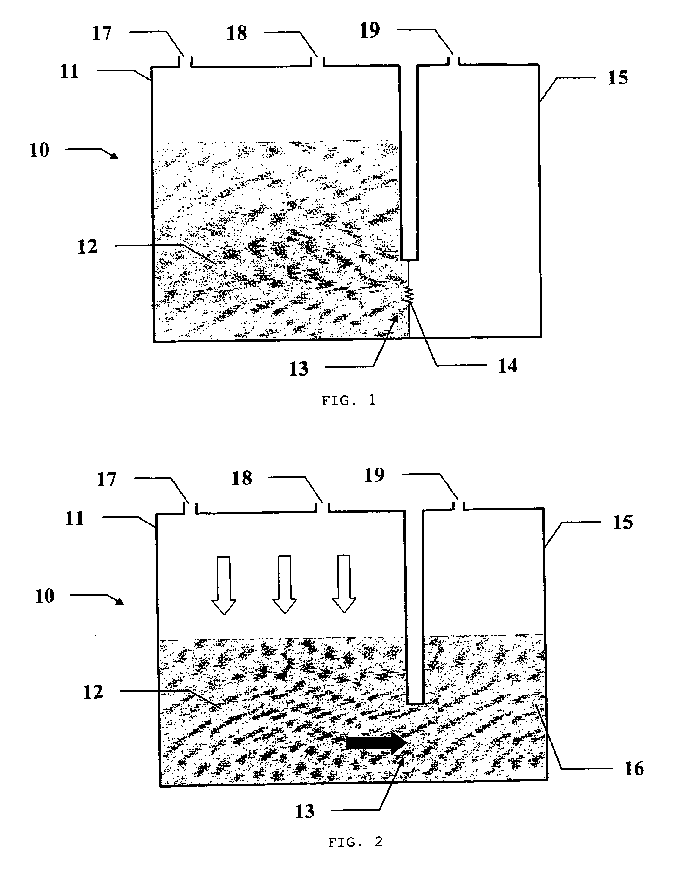

Pour cela, en référence à la figure 1, il est connu de réaliser un réservoir 10, apte à contenir un liquide 12, comprenant un premier volume 11 apte à contenir le liquide 12. Ce premier volume peut comprendre plusieurs orifices de service, tel un orifice de remplissage 17 ou encore un évent de mise à l'air libre 18. Ce premier volume 11 comporte au moins une ouverture 13 initialement obturée par une paroi 14, comme illustré à la figure 1. La paroi 14 est apte à s'escamoter, lorsque une pression exercée sur ladite paroi 14 dépasse un certain seuil (surpression). La figure 2 illustre l'état du réservoir 10, après escamotage de la paroi 14. Selon l'art antérieur, il est généralement prévu un second volume 15, en communication avec le premier volume 11 via ladite ouverture 13. Ce second volume 15 est ainsi apte à accueillir le surplus de liquide 16 qui se déverse depuis le premier volume 11 via l'ouverture 13, après escamotage de la paroi 14. Ainsi, la surpression est résorbée sans répandre de liquide en dehors du réservoir 10. Ce faisant, l'escamotage de la paroi 14 à un endroit choisi protège le reste de la structure du réservoir 10 contre une dégradation non contrôlée pouvant se produire sous l'effet de la surpression.

Cette approche présente plusieurs inconvénients. Il est nécessaire que tant le premier volume 11 et le second volume 15, que leur jonction au niveau de l'ouverture 13, soient réalisés de manière étanche au liquide.

De plus un évent 19 doit nécessairement être ménagé dans le second volume 15 afin de permettre à l'air chassé par le surplus de liquide 16 de sortir du réservoir 10, pour permettre l'entrée de ce surplus de liquide 16. Afin que le liquide 16 ne s'écoule pas par ledit évent 19, il convient de disposer ce dernier hors de portée gravitaire dudit liquide 16, soit au dessus de ce dernier. Ceci peut être difficile ou même impossible à réaliser notamment en cas de possible retournement du réservoir 10. Une autre option consiste à équiper l'évent 19 d'un dispositif, additionnel et donc coûteux, de valve laissant sélectivement passer l'air mais pas le liquide 16.

On connaît, par le document DE 40 18 648, un réservoir pour carburant présentant sur son fond une ouverture obturée de manière étanche par une membrane. En cas de refoulement, la membrane se déforme vers l'extérieur formant une bulle permettant d'accueillir le carburant.

On connaît également, par le document WO 2004/106 155, un réservoir pour carburant où une paroi souple formant un volume supplémentaire pour accueillir le carburant est disposée à l'extérieur du réservoir.

La présente invention propose une solution répondant au problème de confinement du liquide en évitant les inconvénients précités.

La présente invention a pour objet un réservoir apte à contenir un liquide, comprenant un premier volume apte à contenir ledit liquide, ledit premier volume comportant au moins une ouverture initialement obturée par une première paroi, ladite première paroi étant apte à s'escamoter lorsqu'une pression exercée sur elle dépasse un certain seuil, ledit réservoir comprenant encore une deuxième paroi, souple, obturant de manière étanche ladite ouverture lorsque ladite première paroi est escamotée et apte à se déployer, notamment au travers de ladite ouverture, après escamotage de la première paroi, afin d'offrir au liquide un volume supérieur au premier volume.

Selon une caractéristique de l'invention, la deuxième paroi souple fait partie d'une enveloppe souple apte à contenir ledit liquide et apte à épouser sensiblement la forme intérieure du premier volume tant que la première paroi n'est pas escamotée.

Selon une autre caractéristique de l'invention, le premier volume est rigide.

Selon une autre caractéristique de l'invention, le réservoir comprend un second volume, en communication avec le premier volume via ladite ouverture, apte à accueillir ladite deuxième paroi souple lors de son déploiement.

Selon une autre caractéristique de l'invention, le second volume est rigide.

Selon une autre caractéristique de l'invention, l'escamotage de la première paroi est obtenu par rupture de cette dernière.

Selon une autre caractéristique de l'invention, l'escamotage de la première paroi est obtenu par rupture d'au moins une fixation de ladite première paroi.

Selon une autre caractéristique de l'invention, la deuxième paroi souple est, avant déploiement, initialement repliée, le déploiement étant obtenu par dépliage.

Selon une autre caractéristique de l'invention, la deuxième paroi souple est élastique, le déploiement étant obtenu par déformation élastique.

Selon une autre caractéristique de l'invention, la deuxième paroi souple et l'enveloppe souple sont réalisées en textile enduit.

L'invention va maintenant être décrite plus en détail en référence à des modes de réalisation particuliers donnés à titre d'illustration uniquement et représentés sur les figures annexées dans lesquelles :
- les figures 1 et 2, déjà décrites, présentent en vue coupée, un réservoir selon l'art antérieur, respectivement avant et après escamotage de la première paroi,
- les figures 3 et 4, présentent en vue coupée, un réservoir selon l'invention, respectivement avant et après escamotage de la première paroi,
- les figures 5 et 6 détaillent deux modes de réalisation du dispositif d'escamotage de la première paroi,
- la figure 7 présente en vue coupée, un autre mode de réalisation d'un réservoir selon l'invention,
- la figure 8 présente en vue coupée, un autre mode de réalisation d'un réservoir selon l'invention.

Il va de soi que la description détaillée de l'objet de l'invention, donnée uniquement à titre d'illustration, ne constitue en aucune manière une limitation, les équivalents techniques étant également compris dans le champ de la présente invention.

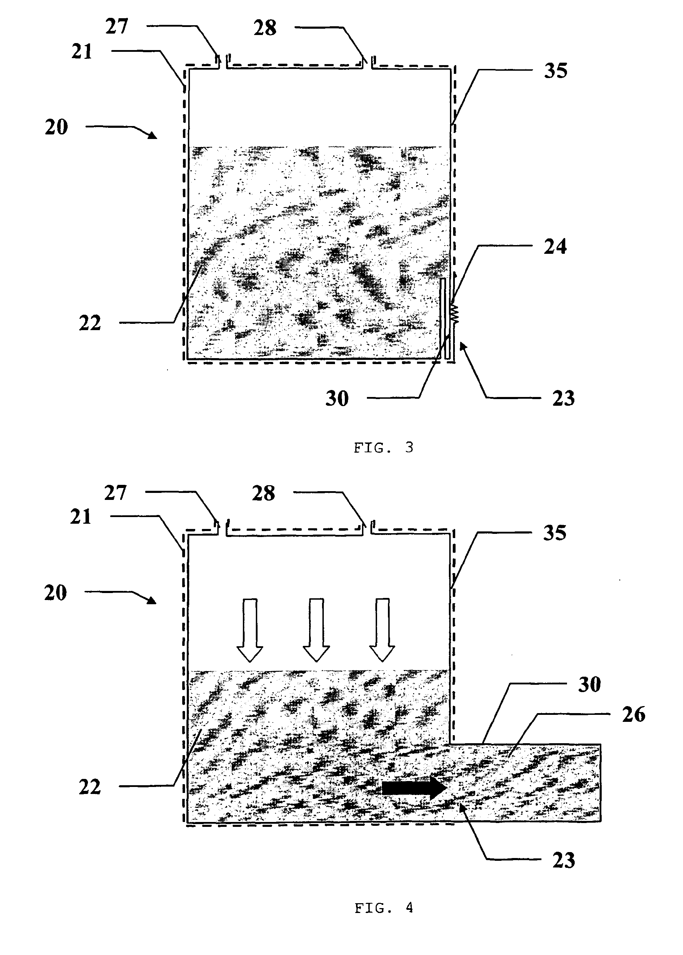

En se référant maintenant à la figure 3, est figuré un réservoir 20 apte à contenir un liquide 22. Comme dans l'art antérieur, ce réservoir 20 comprend un premier volume 21 apte à contenir le liquide 22. Le premier volume 21 comporte au moins une ouverture 23 initialement obturée par une paroi 24, ladite paroi 24 étant apte à s'escamoter lorsque une pression exercée sur celle-ci dépasse un certain seuil.

Selon une caractéristique de l'invention le réservoir 20 comprend encore une enveloppe souple 35 apte à contenir ledit liquide 22 et apte à épouser sensiblement la forme intérieure du premier volume 21 tant que la paroi 24 n'est pas escamotée. L'enveloppe souple 35 n'est pas nécessairement fixée à la paroi intérieure du réservoir 20. Par contre l'enveloppe souple 35 présente nécessairement un orifice au niveau de chacun du ou des orifice(s) présent(s) dans le réservoir 20, tel(s) qu'un orifice de remplissage 27 en liquide, un orifice d'utilisation du liquide (non représenté) ou encore un évent 28 de mise à l'air libre. Au niveau de chacun de ces orifices 27, 28, l'enveloppe souple 35 est fixée de manière étanche au réservoir 20 sur le contour de l'orifice 27, 28.

Selon une caractéristique importante, ladite enveloppe souple 35 est apte à se déployer au niveau d'une zone 30, au travers de l'ouverture 23, après escamotage de la paroi 24, afin d'offrir au liquide 22 un volume supérieur au premier volume 21, évitant ainsi une surpression. Le liquide supplémentaire 26 s'écoule hors du premier volume 21, mais reste contenu dans la partie déployée de l'enveloppe souple 35. Lors de ce déploiement, l'enveloppe souple 35 garantit le confinement du liquide 22, 26.

Au contraire du premier volume 11 selon l'art antérieur qui assurait aussi la fonction de contenant et se devait d'être étanche au liquide 12, le premier volume 21 selon l'invention n'a plus qu'une fonction de support. Il peut ainsi être réalisé au moyen d'un filet souple, continu ou discontinu.

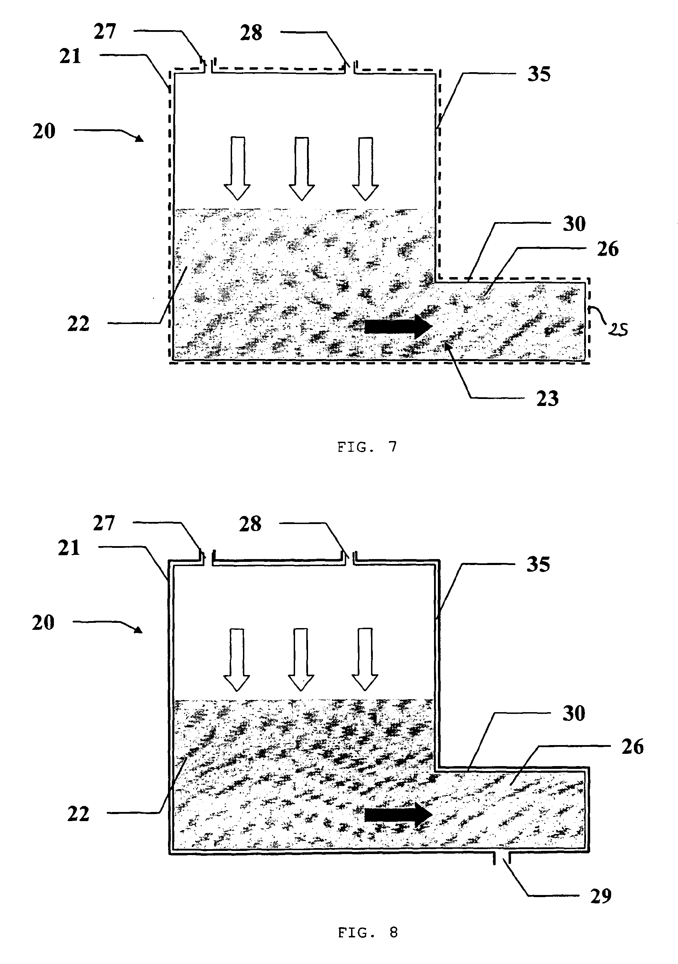

Selon un mode de réalisation préférentiel, le premier volume 21 est rigide afin de supporter l'enveloppe souple 35 et le surplus de liquide 26 et d'assurer leur protection contre un écrasement. Le premier volume 21 peut être discontinu, n'ayant plus de fonction d'étanchéité. Ceci est figuré par un trait pointillé aux figures 3, 4 et 7. Il peut encore être continu afin d'assurer une fonction de protection contre la perforation. Ceci est figuré par un trait continu à la figure 8.

En fonction des contraintes dont le réservoir 20 doit être protégé, le réservoir 20 peut être réalisé en tout matériau. Ainsi il peut être réalisé en matériau composite tel que matière plastique ou résine, armé ou non, ou tout matériau métallique.

Selon l'art antérieur, un second volume 15 est nécessaire pour accueillir le liquide en surplus 16. Ceci n'est plus nécessaire selon l'invention, où l'enveloppe souple 35, plus précisément la zone 30, garantit cette fonction d'accueil avec l'étanchéité nécessaire.

Cependant, le réservoir 20 peut comprendre un second volume 25, accolé au premier volume 21, au niveau de ladite ouverture 23. Ainsi ce second volume 25 peut supporter l'enveloppe souple 35, et le liquide supplémentaire 26 qu'elle contient, lors du déploiement au travers de l'ouverture 23 de la zone 30 de l'enveloppe 35.

A l'instar du premier volume 21, le second volume 25 n'a qu'une fonction de support et de protection de l'enveloppe souple 35. Il peut ainsi être souple et/ou discontinu.

Selon une caractéristique avantageuse, afin de protéger l'enveloppe souple 35 contre un écrasement le second volume 25 peut être rigide.

Il peut encore être avantageusement discontinu. La présence de « trous » multiples dans le second volume 25 réalise de nombreux évents de mise à l'air libre, facilitant ainsi le déploiement de ladite zone 30 de l'enveloppe souple 35, en permettant la sortie de l'air initialement présent dans ledit second volume 25.

Le second volume 25 peut encore avantageusement être continu, afin d'assurer une protection de la zone 30 de l'enveloppe souple 35 contre une éventuelle perforation. Cependant cette continuité ne nécessite pas une étanchéité au liquide.

Afin de faciliter le déploiement de la zone 30 de l'enveloppe souple 35 au travers de l'ouverture 23, au moins un évent 29 de mise à l'air libre est nécessaire dans le second volume 25. Avantageusement par rapport à l'art antérieur, un tel évent 29 voit sa réalisation simplifiée par l'invention. L'orifice d'un tel évent 29 peut être percé en tout point du second volume 25, et n'a pas à être muni d'une quelconque valve, puisque aucun écoulement de liquide n'est à craindre, l'étanchéité étant assurée par l'enveloppe souple 35. Ainsi tel que figuré à la figure 8, un tel évent 29 peut être disposé en un point bas, sans crainte d'un écoulement de liquide.

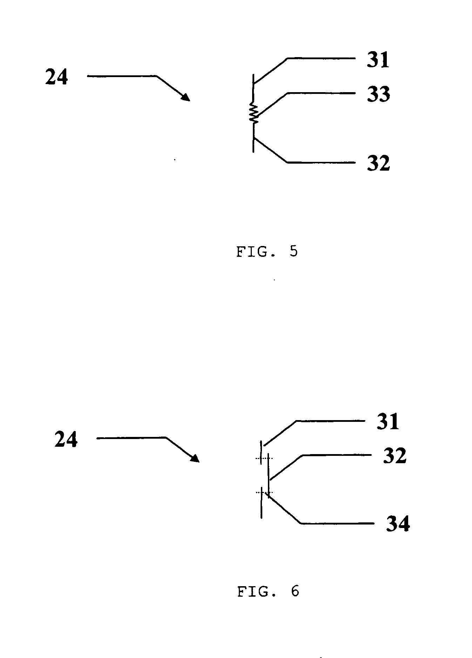

La paroi 24 escamotable peut être réalisée de diverses façons. Ainsi elle peut être réalisée par une paroi fragilisée afin de se rompre. La fragilisation peut suivre une ligne de contour longeant l'ouverture 23 ou encore comprendre des lignes transverses à ladite ouverture 23. Ceci est illustré à la figure 5, où une ligne/zone 33 est fragilisée entre deux éléments 31, 32.

La paroi 24 escamotable peut encore être réalisée, comme illustré à la figure 6, au moyen d'une pièce rapportée 32 sur un pièce 31, obturant l'ouverture 23 et fixée au moyen d'au moins une fixation fragilisée 34. La rupture de ladite fixation 34 réalise l'escamotage.

La paroi 24 escamotable peut encore être réalisée au moyen d'une porte articulée, scellée par un verrou fragilisé.

L'homme du métier saura déterminer d'autres modes de réalisation à partir de ces exemples illustratifs.

Selon un premier mode de réalisation, illustré à la figure 3, la zone 30 de l'enveloppe souple 35 est, avant déploiement, initialement repliée. Le déploiement est alors obtenu par dépliage de la zone 30 de l'enveloppe souple 35. Dans ce cas l'enveloppe souple 35 peut être réalisée dans un matériau peu ou pas déformable. Avantageusement, la zone 30 de l'enveloppe souple 35, destinée à se déployer hors du premier volume 21, peut être préformée pour épouser une forme choisie, par exemple la forme d'un éventuel second volume 25.

Selon un second mode de réalisation, la zone 30 de l'enveloppe souple 35 est réalisée de manière à être élastique. Dans ce cas, le déploiement et la baisse de pression qui l'accompagne, sont obtenus par déformation élastique de ladite zone 30 de l'enveloppe souple 35.

L'enveloppe souple 35 et sa zone 30 peuvent être réalisées en tout matériau suffisamment souple pour subir les contraintes du déploiement, tout en assurant l'étanchéité au liquide.

En fonction du liquide contenu, d'autres contraintes, chimiques notamment, peuvent venir s'ajouter.

Dans le cas d'utilisation de carburant, l'enveloppe souple 35 est avantageusement réalisée en textile enduit. Le textile peut être ainsi un tissu tissé ou non. L'enduction étant par exemple réalisée avec un élastomère de type caoutchouc.

Diverses modifications peuvent être apportées au mode de réalisation décrit ci-dessus sans pour autant sortir de l'invention.

Ainsi par exemple, l'enveloppe souple 35 pourrait être supprimée dans sa grande majorité pour ne laisser subsister que la seule zone 30, cette dernière étant alors fixée de manière étanche sur le contour de l'ouverture 23.

## Revendications

1. Réservoir apte à contenir un liquide, comprenant un premier volume (21) apte à contenir ledit liquide (22), ledit premier volume (21) comportant au moins une ouverture (23) initialement obturée par une première paroi (24), ladite première paroi (24) étant apte à s'escamoter lorsqu'une pression exercée sur elle dépasse un certain seuil, le réservoir comprenant une deuxième paroi (30) souple,
**caractérisé en ce que** la deuxième paroi (30) obture de manière étanche ladite ouverture (23) lorsque la première paroi (24) est escamotée est est apte à se déployer, au travers de ladite ouverture (23), après escamotage de ladite première paroi (24), afin d'offrir au liquide un volume supérieur au premier volume (21).

2. Réservoir selon la revendication 1, où ladite deuxième paroi souple (30) fait partie d'une enveloppe souple (35) apte à contenir ledit liquide (22) est apte à épouser sensiblement la forme intérieure du premier volume (21) tant que la première paroi (24) n'est pas escamotée.

3. Réservoir selon la revendication 1 ou 2, où le premier volume (21) est rigide.

4. Réservoir selon la revendication 1, 0 ou 3, comprenant un second volume (25), en communication avec le premier volume (21) via ladite ouverture (23), apte à accueillir ladite deuxième paroi souple (35) lors de son déploiement.

5. Réservoir selon l'une quelconque des revendications 1 à 4, où le second volume (25) est rigide.

6. Réservoir selon l'une quelconque des revendications 1 à 5, où l'escamotage de la première paroi (24) est obtenu par rupture de cette même paroi (24).

7. Réservoir selon l'une quelconque des revendications 1 à 6, où l'escamotage de la première paroi (24) est obtenu par rupture d'au moins une fixation (34) de ladite première paroi (24).

8. Réservoir selon l'une quelconque des revendications 1 à 7, où la deuxième paroi souple (30) est, avant déploiement, initialement repliée, le déploiement étant obtenu par dépliage.

9. Réservoir selon l'une quelconque des revendications 1 à 8, où la deuxième paroi souple (30) est élastique, le déploiement étant obtenu par déformation élastique.

10. Réservoir selon l'une quelconque des revendications 1 à 9, où la deuxième paroi souple (30) et l'enveloppe souple (35) sont réalisées en textile enduit.

## Claims

1. Tank capable of containing a liquid, comprising a first volume (21) capable of containing the said liquid (22), the said first volume (21) including at least one opening (23) initially closed by a first wall (24), the said first wall (24) being capable of being retracted when a pressure exerted thereon exceeds a certain threshold, the tank comprising a second flexible wall (30),
**characterised in that** the second wall (30) closes the said opening (23) in a sealed manner when the first wall (24) is retracted and is capable of being deployed, via the said opening (23), after the retraction of the said first wall (24) in order to provide the liquid with a volume that is greater than the first volume (21).

2. Tank according to claim 1, wherein the said second flexible wall (30) forms part of a flexible casing (35) capable of containing the said liquid (22) and capable of substantially matching the internal shape of the first volume (21) as long as the first wall (24) is not retracted.

3. Tank according to claim 1 or claim 2, wherein the first volume (21) is rigid.

4. Tank according to claim 1, 2 or 3, comprising a second volume (25) communicating with the first volume (21) via the said opening (23), capable of receiving the said second flexible wall (35) when it is deployed.

5. Tank according to any one of claims 1 to 4, wherein the second volume (25) is rigid.

6. Tank according to any one of claims 1 to 5, wherein the retraction of the first wall (24) is obtained by the rupture of this wall (24).

7. Tank according to any one of claims 1 to 6, wherein the retraction of the first wall (24) is obtained by the rupture of at least one fixing (34) of the said first wall (24).

8. Tank according to any one of claims 1 to 7, wherein, before it is deployed, the second flexible wall (30) is initially folded up, deployment being obtained by unfolding.

9. Tank according to any one of claims 1 to 8, wherein the second flexible wall (30) is elastic, deployment being obtained by elastic deformation.

10. Tank according to any one of claims 1 to 9, wherein the second flexible wall (30) and the flexible casing (35) are made of a coated textile.

## Patentansprüche

1. Behälter, der dazu geeignet ist, eine Flüssigkeit zu enthalten, ein erstes Volumen (21) aufweisend, das dazu geeignet ist, die Flüssigkeit (22) zu enthalten, wobei das erste Volumen (21) mindestens eine Öffnung (23) umfasst, die anfänglich durch eine erste Wand (24) verschlossen ist, wobei die erste Wand (24) dazu geeignet ist, sich einzufahren, wenn ein auf sie ausgeübter Druck einen bestimmten Schwellenwert übersteigt, wobei der Behälter eine nachgiebige, zweite Wand (30) aufweist, **dadurch gekennzeichnet, dass** die zweite Wand (30) die Öffnung (23) dicht verschließt, wenn die erste Wand (24) eingefahren ist, und dazu geeignet ist, sich nach einem Einfahren der ersten Wand (24) durch die erste Öffnung (23) auszufahren, um der Flüssigkeit ein Volumen zu bieten, das größer ist als das erste Volumen (21).

2. Behälter nach Anspruch 1, wobei die nachgiebige, zweite Wand (30) einen Teil einer nachgiebigen Hülle (35) bildet, die dazu geeignet ist, die Flüssigkeit (22) zu enthalten und im Wesentlichen die Innenform des ersten Volumens (21) anzunehmen, solange die erste Wand (24) nicht eingefahren ist.

3. Behälter nach Anspruch 1 oder 2, wobei das erste Volumen (21) starr ist.

4. Behälter nach Anspruch 1, 2 oder 3, ein zweites Volumen (25) aufweisend, das mit dem ersten Volumen (21) über die Öffnung (23) in Verbindung steht und geeignet ist, die nachgiebige, zweite Wand (30) bei deren Ausfahren aufzunehmen.

5. Behälter nach einem der Ansprüche 1 bis 4, wobei das zweite Volumen (25) starr ist.

6. Behälter nach einem der Ansprüche 1 bis 5, wobei das Einfahren der ersten Wand (24) durch Durchbrechen eben dieser Wand (24) erzielt wird.

7. Behälter nach einem der Ansprüche 1 bis 6, wobei das Einfahren der ersten Wand (24) durch Durchbrechen mindestens einer Befestigung (34) der ersten Wand (24) erzielt wird.

8. Behälter nach einem der Ansprüche 1 bis 7, wobei die nachgiebige, zweite Wand (30) vor dem Ausfahren anfänglich zusammengefaltet ist, wobei das Ausfahren durch Auseinanderfalten erzielt wird.

9. Behälter nach einem der Ansprüche 1 bis 8, wobei die nachgiebige, zweite Wand (30) elastisch ist, wobei das Ausfahren durch elastische Verformung erzielt wird.

10. Behälter nach einem der Ansprüche 1 bis 9, wobei die nachgiebige, zweite Wand (30) und die nachgiebige Hülle (35) aus beschichtetem Gewebe hergestellt sind.
